(19) Europäisches Patentamt
European Patent Office
Office européen des brevets

(11) EP 3 348 423 A1

(12) EUROPEAN PATENT APPLICATION
published in accordance with Art. 153(4) EPC

(43) Date of publication:
18.07.2018 Bulletin 2018/29

(51) Int Cl.:
B60C 1/00 (2006.01)   B60C 11/00 (2006.01)
B60C 11/03 (2006.01)   B60C 11/12 (2006.01)
C08L 9/00 (2006.01)   C08L 25/10 (2006.01)
C08L 91/00 (2006.01)

(21) Application number: 16843881.0

(22) Date of filing: 28.07.2016

(86) International application number:
PCT/JP2016/003508

(87) International publication number:
WO 2017/043008 (16.03.2017 Gazette 2017/11)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(30) Priority: 07.09.2015 JP 2015176072

(71) Applicant: Bridgestone Corporation
Tokyo 104-8340 (JP)

(72) Inventors:
• KUWAYAMA, Isao
Tokyo 104-8340 (JP)
• SAKURAI, Hideyuki
Tokyo 104-8340 (JP)

(74) Representative: Oxley, Robin John George
Marks & Clerk LLP
90 Long Acre
London WC2E 9RA (GB)

(54) PNEUMATIC TIRE

(57) A pneumatic tire having sufficiently improved wet performance is provided. A pneumatic tire comprises a tread rubber that includes: a tread surface rubber layer located at an outermost surface of a tread; and a tread inside rubber layer located on a tire radial inner side of the tread surface rubber layer. A 100% modulus of the tread surface rubber layer is higher than a 100% modulus of the tread inside rubber layer, and the tread surface rubber layer is made of a rubber composition including: a rubber component (A) containing 50 mass% or more of diene-based rubber; and, with respect to 100 parts by mass of the rubber component (A), 5 to 50 parts by mass of at least one additive component (B) selected from: thermoplastic resin; oil; and an aromatic vinyl compound-conjugated diene compound copolymer whose polystyrene-equivalent weight-average molecular weight measured by gel permeation chromatography is 5,000 to 200,000.

FIG. 2

EP 3 348 423 A1

**Description**

TECHNICAL FIELD

The present disclosure relates to a pneumatic tire.

BACKGROUND

Various pneumatic tires including a tread rubber that includes a tread surface rubber layer located at the outermost surface of the tread and a tread inside rubber layer located on the tire radial inner side of the tread surface rubber layer have been conventionally proposed (for example, JP 2014-162242 A (PTL 1)). In such a pneumatic tire, the tread surface rubber layer is formed as a rubber layer relatively high in rigidity, and the tread inside rubber layer is formed as a rubber layer relatively low in rigidity. Thus, for example, the tread surface rubber layer improves the land portion rigidity in the tire circumferential direction of the tire surface to improve wear resistance performance, and the tread inside rubber layer suppresses hysteresis loss to improve the rolling resistance performance of the tire.

CITATION LIST

Patent Literature

PTL 1: JP 2014-162242 A

SUMMARY

(Technical Problem)

In the pneumatic tire mentioned above, the modulus of the tread surface rubber layer can be higher than the modulus of the tread inside rubber layer. Due to such relative high modulus of the tread surface rubber layer, wet performance which is the running performance when running on a wet road surface has room for improvement. In detail, due to relatively high modulus of the tread surface rubber layer, there is a tendency that, when the tire comes into contact with the road surface, the tread rubber surface does not sufficiently follow the irregularities of the road surface in micro-scale, making it difficult to achieve a high actual footprint area. There is thus room for examination as to wet performance.
It could therefore be helpful to provide a pneumatic tire having sufficiently improved wet performance.

(Solution to Problem)

A pneumatic tire according to the present disclosure is a pneumatic tire comprising a tread rubber that includes: a tread surface rubber layer located at an outermost surface of a tread; and a tread inside rubber layer located on a tire radial inner side of the tread surface rubber layer, wherein a 100% modulus of the tread surface rubber layer is higher than a 100% modulus of the tread inside rubber layer, and the tread surface rubber layer is made of a rubber composition including: a rubber component (A) containing 50 mass% or more of diene-based rubber; and, with respect to 100 parts by mass of the rubber component (A), 5 to 50 parts by mass of at least one additive component (B) selected from: thermoplastic resin; oil; and an aromatic vinyl compound-conjugated diene compound copolymer whose polystyrene-equivalent weight-average molecular weight measured by gel permeation chromatography is 5,000 to 200,000.
The pneumatic tire according to the present disclosure has sufficiently improved wet performance.
In the present disclosure, the "100% modulus" is tensile stress upon 100% elongation, which is measured by preparing a dumbbell No. 3 sample and conducting a tensile test under the conditions of a room temperature of 23°C and a speed of 500 ± 25 mm/min according to JIS K6251. In the present disclosure, the tread rubber means rubber that does not include members such as belts optionally included in the tread portion.
Preferably, the pneumatic tire according to the present disclosure comprises, in a tread surface, at least one rib-like land portion defined by a tread ground contact edge and a circumferential main groove continuously extending in a tire circumferential direction or by two circumferential main grooves continuously extending in the tire circumferential direction and adjacent to each other.
With this structure, wet performance can be further improved while improving the tire circumferential rigidity of the land portion.
In the present disclosure, the "rib-like land portion" is a land portion in which the below-mentioned groove that has both ends open to the circumferential main grooves or the circumferential main groove and the tread ground contact edge defining the land portion and cuts across the land portion is not provided.

Preferably, in the pneumatic tire according to the present disclosure, the rib-like land portion has no both-end open sipe having both ends open to the tread ground contact edge and the circumferential main groove or to the two circumferential main grooves, and has a one-end open sipe having one end open to one of the tread ground contact edge and the circumferential main groove or to one of the two circumferential main grooves and the other end terminating within the rib-like land portion.

With this structure, wet performance can be further improved while maintaining the circumferential rigidity of the land portion.

In the present disclosure, the "sipe" refers to that whose opening width to the tread surface is 1.5 mm or less, in a state where the tire is attached to a rim, applied with an internal pressure of 30 kPa which is such a pressure that maintains the tire shape, and placed under no load (hereafter, the "state where the tire is attached to a rim, applied with an internal pressure of 30 kPa which is such a pressure that maintains the tire shape, and placed under no load" is also referred to as "low-pressure no-load state"). The "groove" refers to that whose opening width to the tread surface is more than 1.5 mm in the low-pressure no-load state.

The "rim" is an approved rim ("measuring rim" in ETRTO Standards Manual, "design rim" in TRA Year Book) in applicable size that is described or will be described in the future in an effective industrial standard in areas where tires are produced or used, such as JATMA (Japan Automobile Tyre Manufacturers Association) Year Book in Japan, ETRTO (European Tyre and Rim Technical Organisation) Standards Manual in Europe, or TRA (Tire and Rim Association, Inc.) Year Book in the United States (the "rim" includes not only current size but also a size that may be included in the industrial standard in the future, and an example of the "size that will be described in the future" is the size described as "future developments" in ETRTO Standards Manual 2013). In the case of a size not described in the industrial standard, the "rim" refers to a rim whose width corresponds to the bead width of the tire.

The dimensions, etc. of each element of the tread surface are measured in a developed view of the tread surface in the low-pressure no-load state, unless otherwise stated.

Preferably, in the pneumatic tire according to the present disclosure, the one-end open sipe includes: a circumferential sipe portion extending from the other end in the tire circumferential direction; and a widthwise sipe portion extending from the circumferential sipe portion in a tire width direction and open to the circumferential main groove or the tread ground contact edge.

With this structure, wet performance can be effectively improved while maintaining the circumferential rigidity of the land portion.

Preferably, in the pneumatic tire according to the present disclosure, the rib-like land portion has a both-end closed sipe having both ends terminating within the rib-like land portion.

With this structure, wet performance can be more effectively improved while maintaining the circumferential rigidity of the land portion.

(Advantageous Effect)

It is thus possible to provide a pneumatic tire having sufficiently improved wet performance.

BRIEF DESCRIPTION OF THE DRAWINGS

In the accompanying drawings:

FIG. 1 is a tire widthwise schematic cross-sectional view of a pneumatic tire according to Embodiment 1 of the present disclosure;
FIG. 2 is a developed view illustrating the tread pattern of the pneumatic tire in FIG. 1;
FIG. 3A is a diagram illustrating the wet performance of a wide radial tire;
FIG. 3B is a diagram illustrating the wet performance of a narrow radial tire;
FIG. 4 is a developed view illustrating the tread pattern of a pneumatic tire according to Embodiment 2 of the present disclosure;
FIG. 5 is a developed view illustrating the tread pattern of a pneumatic tire according to Embodiment 3 of the present disclosure;
FIG. 6 is a tire widthwise schematic cross-sectional view of a tire widthwise half of a pneumatic tire according to Embodiment 4 of the present disclosure;
FIG. 7 is a schematic plan view illustrating a first example of a belt structure;
FIG. 8 is a schematic plan view illustrating a second example of the belt structure;
FIG. 9 is a schematic plan view illustrating a third example of the belt structure;
FIG. 10 is a tire widthwise schematic cross-sectional view of a tire widthwise half of a pneumatic tire according to Embodiment 5 of the present disclosure; and

FIG. 11 is a tire widthwise schematic partial cross-sectional view of a tire widthwise half of a pneumatic tire according to Embodiment 6 of the present disclosure.

DETAILED DESCRIPTION

The following illustrates and describes a pneumatic tire (hereafter also simply referred to as "tire") according to Embodiment 1 of the present disclosure in detail, with reference to drawings. The following description and the drawings are examples for describing the tire according to the present disclosure, and the present disclosure is not limited to the following description and the drawings.

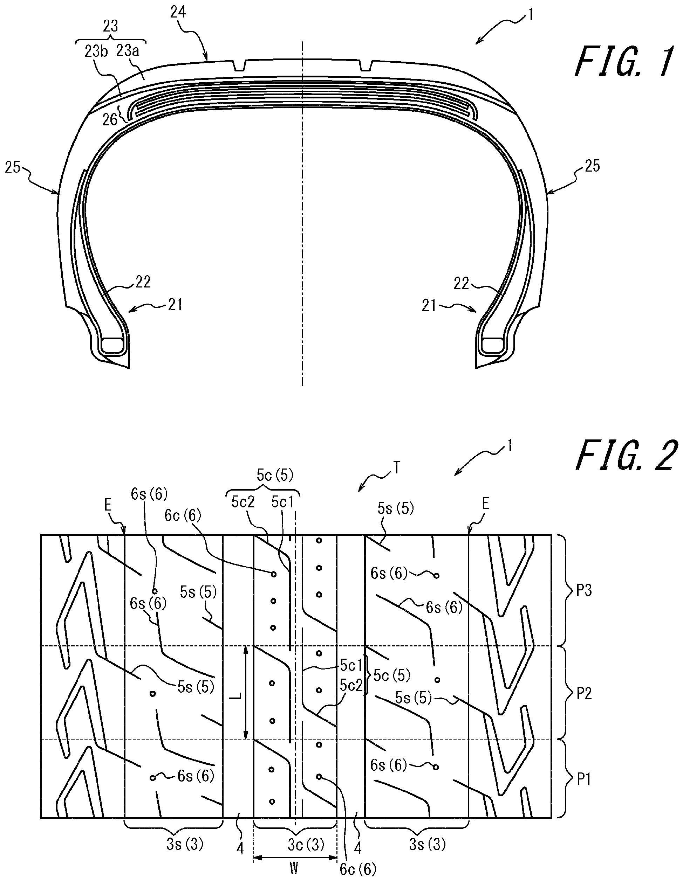

For example, a pneumatic tire 1 according to Embodiment 1 includes at least: a carcass 22 composed of one or more carcass plies of radially arranged cords toroidally extending between a pair of bead portions 21; and a tread rubber 23 provided on the tire radial outer side of the carcass 22, as illustrated in FIG. 1.

In more detail, the tire 1 includes: a tread portion 24; a pair of sidewall portions 25 continuously extending from the sides of the tread portion 24 inward in the tire radial direction; the bead portions 21 continuous from the tire radial inner ends of the respective sidewall portions 25; and the carcass 22 composed of one or more carcass plies toroidally extending between the pair of bead portions 21 and reinforcing each portion. A bead core is buried in each bead portion 21. A rubber chafer is provided on the outer surface of each bead portion 21, as a reinforcement member of the bead portion 21. A belt 26 composed of one or more belt layers is provided in the crown portion of the carcass 22. The tread rubber 23 is located on the tire radial outer side of the crown portion of the carcass 22.

In the tire 1, the tread rubber 23 includes a tread surface rubber layer 23a located at the outermost surface of the tread, and a tread inside rubber layer 23b located on the tire radial inner side of the tread surface rubber layer 23a, as illustrated in FIG. 1. The 100% modulus of the tread surface rubber layer 23a is higher than the 100% modulus of the tread inside rubber layer 23b. In the tire 1 in this embodiment, the tread rubber 23 may be composed of two or more rubber layers. In other words, a plurality of tread inside rubber layers 23b may be provided.

The tread surface rubber layer 23a of the tread rubber 23 in the tire 1 according to the present disclosure is made of a rubber composition including: a rubber component (A) containing 50 mass% or more of diene-based rubber; and, with respect to 100 parts by mass of the rubber component (A), 5 to 50 parts by mass of at least one additive component (B) selected from: thermoplastic resin; oil; and an aromatic vinyl compound-conjugated diene compound copolymer whose polystyrene-equivalent weight-average molecular weight measured by gel permeation chromatography is 5,000 to 200,000.

The functions and effects of the tire 1 according to the present disclosure are described below.

Conventionally, in a tire including a tread rubber that includes a tread surface rubber layer and a tread inside rubber layer, the modulus of the rubber composition of the tread surface rubber layer can be higher than that of the tread inside rubber layer, so that the land portion rigidity in the tire circumferential direction of the tire surface can be improved to improve performance such as wear resistance.

Meanwhile, since the tread surface rubber layer with relatively high 100% modulus has comparatively high rigidity, the tread rubber surface does not sufficiently follow the irregularities of the road surface, and the actual footprint area when the tire comes into contact with the road surface tends to decrease. In other words, the tread surface partly separates from the road surface in micro-scale, and the substantial contact area tends to be relatively low even when the area of the tread surface T is the same. This hampers a desired significant improvement in wet performance.

In the present disclosure, the tread surface rubber layer 23a of the tread rubber 23 is made of the above-mentioned rubber composition. This improves the road surface followability of the tread surface and increases the actual footprint area on the road surface, and thus improves wet performance. In detail, the above-mentioned rubber composition has a property of decreasing in elasticity as the rubber state shifts from a low-strain region to a high-strain region. By forming the tread surface rubber layer 23a which comes into contact with the road surface using this rubber composition, when the surface portion of the tread rubber 23 is in a high-strain state due to the behavior of the tire 1 such as acceleration or braking, the rubber composition decreases in elasticity and allows the tread surface to be in contact with the road surface in micro-scale. As a result, the substantial contact area can be increased. Here, since the inside of the tread surface rubber layer 23a away from the vicinity of the road surface is not in a high-strain state, high circumferential rigidity and therefore high frictional force can be maintained.

Thus, by designing the tread surface rubber layer 23a to have relatively high 100% modulus and also be made of the above-mentioned rubber composition, it is possible to comprehensively improve wet performance in macro-scale (frictional force) and micro-scale (actual footprint area).

The rubber composition contains the specific amount of the additive component (B) with respect to the rubber component (A). This improves the grounding property (followability) of the tread rubber 23 against the road surface. Here, given that the additive component (B) has particularly high compatibility with diene-based rubber such as natural rubber or butadiene rubber, the effect of adding the additive component (B) is particularly high in the case where the rubber component (A) in the rubber composition contains 50 mass% or more of diene-based rubber.

The tread rubber having the above-mentioned properties and rubber composition in the tire according to Embodiment 1 of the present disclosure is described below.

[Tread rubber]

The 100% modulus of the tread surface rubber layer is higher than the 100% modulus of the tread inside rubber layer in the tread rubber. In this embodiment, the 100% modulus of the tread surface rubber layer is preferably 1.05 times to 2.50 times and more preferably 1.10 times to 2.00 times the 100% modulus of the tread inside rubber layer, in terms of improving wear resistance while improving the circumferential rigidity of the tread rubber and increasing the frictional force of the tire against the road surface more sufficiently.

The 100% modulus of the tread surface rubber layer is preferably 2.0 MPa to 4.0 MPa, and more preferably 2.5 MPa to 4.0 MPa.

By adjusting the rubber component (A) and the additive component (B) in any way or by a known method, the above-mentioned relationship between the 100% moduli of the respective rubber layers can be realized.

The tread surface rubber layer is preferably formed so that its maximum thickness in the region of 15% or less of the tread width from the tire equatorial plane to each of both tire widthwise outer sides is 0.1 times to 0.9 times the thickness of the tread rubber at the position where the thickness is measured, in a tire widthwise cross-sectional view. This prevents excessively high rigidity of the whole tire caused by the presence of an excessive amount of tread surface rubber layer in the tread rubber, while improving the land portion rigidity in the tire circumferential direction to improve wet performance by the tread surface rubber layer with relatively high 100% modulus. The thickness of each of the tread rubber and the tread surface rubber layer mentioned here is the length measured along the tire radial direction.

From the same viewpoint, the thickness of the tread surface rubber layer is more preferably 0.5 times to 0.9 times and further preferably 0.7 times to 0.8 times the thickness of the tread rubber.

In the case where the tread rubber includes three or more rubber layers (in the case where there are a plurality of tread inside rubber layers), the magnitude relationship between the 100% moduli of the tread inside rubber layers other than the tread surface rubber layer may be set in any way. In such a case, the tread surface rubber layer has higher 100% modulus than at least one of the tread inside rubber layers, and preferably has higher 100% modulus than all tread inside rubber layers.

[Tread surface rubber layer]

The tread surface rubber layer is made of the rubber composition including: the rubber component (A) containing 50 mass% or more of diene-based rubber; and, with respect to 100 parts by mass of the rubber component (A), 5 to 50 parts by mass of at least one additive component (B) selected from: thermoplastic resin; oil; and an aromatic vinyl compound-conjugated diene compound copolymer whose polystyrene-equivalent weight-average molecular weight measured by gel permeation chromatography is 5,000 to 200,000.

[Rubber component (A)]

The rubber component (A) in the rubber composition contains 50 mass% or more of diene-based rubber. The content of the diene-based rubber in the rubber component (A) is preferably 70 mass% or more, and more preferably 80 mass% or more. If the content of the diene-based rubber in the rubber component (A) is 50 mass% or more, the below-mentioned effect of adding the additive component (B) can be achieved sufficiently.

No upper limit is placed on the content of the diene-based rubber in the rubber component (A), and the whole rubber component (A) may be the diene-based rubber.

The diene-based rubber is not limited. Examples of the diene-based rubber include natural rubber, styrene-butadiene rubber, isoprene rubber, butadiene rubber, chloroprene rubber, acrylonitrile-butadiene rubber, and isobutylene-isoprene rubber. Of these, natural rubber or butadiene rubber is preferable as the diene-based rubber, in terms of achieving better wet performance. These diene-based rubbers may be used singly or in combination of two or more. It is more preferable to contain 40 mass% or more of natural rubber, and particularly preferable to contain 70 mass% or more of natural rubber.

Further, the rubber component (A) preferably contains styrene-butadiene rubber (SBR). SBR increases the glass transition temperature (Tg) of the rubber composition, and improves steering stability and braking performance on a dry road surface.

Preferably, the SBR used in the rubber composition is such SBR that "the ratio [%] of bound styrene content in the total polymer unit + the ratio [%] of vinyl bond content in the total polymer unit $\times$ 1/2" is 25 % mass or less, and the content of the SBR is 50 mass% or more. When the ratio of bound styrene content and the ratio of vinyl bond content in the total polymer unit satisfy this relationship, the wet performance of the rubber composition can be further improved.

[Additive component (B)]

The additive component (B) in the rubber composition is at least one selected from: thermoplastic resin; oil; and an aromatic vinyl compound-conjugated diene compound copolymer whose polystyrene-equivalent weight-average molecular weight measured by gel permeation chromatography is 5,000 to 200,000.

The thermoplastic resin that may be included in the rubber composition as the additive component (B) is not limited. The addition of the thermoplastic resin enables the rubber composition to decrease in elasticity in a high-strain region. In the case where a lot of natural rubber is contained as the rubber component (A), the thermoplastic resin particularly contributes to the wet performance improving effect because the thermoplastic resin has high compatibility with natural rubber.

As the thermoplastic resin, $C_5$ resin, $C_9$ resin, $C_5$-$C_9$ resin, dicyclopentadiene resin, rosin resin, alkylphenol resin, or terpene phenol resin is preferable, in terms of further improvement in wet performance. These thermoplastic resins may be used singly or in combination of two or more.

The $C_5$ resin denotes $C_5$ synthetic petroleum resin, and is a solid polymer obtained by polymerizing $C_5$ fraction using a Friedel-Crafts type catalyst such as $AlCl_3$ or $BF_3$. Examples include copolymers mainly composed of isoprene, cyclopentadiene, 1,3-pentadiene, 1-pentene, or the like, copolymers of 2-pentene and dicyclopentadiene, and polymers mainly composed of 1,3-pentadiene.

The $C_9$ resin denotes $C_9$ synthetic petroleum resin, and is a solid polymer obtained by polymerizing $C_9$ fraction using a Friedel-Crafts type catalyst such as $AlCl_3$ or $BF_3$. Examples include copolymers mainly composed of indene, methylindene, $\alpha$-methylstyrene, vinyltoluene, or the like.

The $C_5$-$C_9$ resin denotes $C_5$-$C_9$ synthetic petroleum resin, and is a solid polymer obtained by polymerizing $C_5$ to $C_9$ fraction using a Friedel-Crafts type catalyst such as $AlCl_3$ or $BF_3$. Examples include copolymers mainly composed of styrene, vinyltoluene, $\alpha$-methylstyrene, indene, or the like. In the present disclosure, resin including less component of $C_9$ or more is preferable as the $C_5$-$C_9$ resin, in terms of compatibility with the rubber component (A). Here, "including less component of $C_9$ or more" means that the component of $C_9$ or more in the total amount of resin is less than 50 mass% and preferably 40 mass% or less.

The dicyclopentadiene resin is petroleum resin using, as main raw material, dicyclopentadiene in the $C_5$ fraction. Examples include trade name "MARUKAREZ M" series (M-890A, M-845A, M-990A, etc.) by Maruzen Petrochemical Co., Ltd.

The rosin resin may be natural resin rosin such as gum rosin, tall oil rosin, or wood rosin included in raw rosin or tall oil, or modified rosin, a rosin derivative, or a modified rosin derivative such as polymerized rosin or its partially hydrogenated rosin, glycerin ester rosin or its partially hydrogenated rosin or completely hydrogenated rosin, or pentaerythritol ester rosin or its partially hydrogenated rosin or polymerized rosin.

The alkylphenol resin is phenol resin having an alkyl group. Examples include alkylphenol-acetylene resin such as p-tert-butylphenol-acetylene resin, and alkylphenol-formaldehyde resin with a low degree of polymerization.

The terpene phenol resin is resin obtained by a method of causing reaction between any of terpenoids and any of various phenols using a Friedel-Crafts type catalyst and optionally further condensing them using formalin. The terpenoid as raw material is not limited. The terpenoid is preferably monoterpene hydrocarbon such as $\alpha$-pinene or limonene, more preferably contains $\alpha$-pinene, and is particularly preferably $\alpha$-pinene. In the present disclosure, terpene phenol resin with a high ratio of phenol component is suitable.

The thermoplastic resin preferably includes novolac-type phenol resin. The inclusion of the novolac-type phenol resin in the rubber composition increases the elastic modulus in the rubber composition and improves steering stability, without using any curing agent and without causing a decrease in wet performance.

The oil that may be included in the rubber composition as the additive component (B) is not limited. Examples of the oil include petroleum softeners such as aromatic oil, paraffinic oil, spindle oil, naphthenic oil, MES, TDAE, and SRAE, and vegetable softeners such as palm oil, castor oil, cotton oil, and soybean oil. In the case of adding the oil, an oil that is liquid at a normal temperature of about 25°C is particularly preferable, in terms of handling easiness. Examples of such an oil include petroleum softeners such as aromatic oil, paraffinic oil, and naphthenic oil.

The aromatic vinyl compound-conjugated diene compound copolymer whose polystyrene-equivalent weight-average molecular weight measured by gel permeation chromatography is 5,000 to 200,000 that may be included in the rubber composition as the additive component (B) is not limited. As long as the copolymer is an aromatic vinyl compound-conjugated diene compound copolymer with a low molecular weight and has an average molecular weight of 5,000 to 200,000, the rubber composition containing this copolymer can have a property of sufficiently decreasing in elasticity in a high-strain region. From the same viewpoint, it is preferable that the aromatic vinyl compound content is 5 to 80 mass%, and the vinyl bond content of the conjugated diene compound part is 10 to 80 mass%. Note that the additive component (B) is not included in the rubber component (A).

The content of the additive component (B) in the rubber composition is 5 to 50 parts by mass with respect to 100 parts by mass of the rubber component (A). The content of the additive component (B) in the rubber composition is preferably 10 to 30 parts by mass and more preferably 10 to 25 parts by mass, in terms of wet performance improvement. The additive component (B) is not limited as long as it includes at least one selected from: thermoplastic resin; oil; and an aromatic vinyl compound-conjugated diene compound copolymer whose polystyrene-equivalent weight-average molecular weight measured by gel permeation chromatography is 5,000 to 200,000. However, the additive component (B) preferably includes at least thermoplastic resin, and the content of the thermoplastic resin is more preferably 10 to 25 parts by mass with respect to 100 parts by mass of the rubber component (A).

[Filler (C)]

The rubber composition may include a filler (C), in addition to the rubber component (A) and the additive component (B). The inclusion of the filler (C) achieves high reinforcement and low heat generating property without impairing rubber property such as flexibility.

The content of the filler (C) in the rubber composition is not limited, but is preferably 30 to 110 parts by mass and more preferably 40 to 90 parts by mass with respect to 100 parts by mass of the rubber component (A).

If the content of the filler (C) is 30 to 110 parts by mass, the reinforcing effect can be achieved without impairing the property of the rubber component (A) such as flexibility. In particular, if the content of the filler (C) is 40 to 90 parts by mass, the effects such as reducing rolling resistance and improving braking performance on a wet road surface can be achieved without impairing the flexibility of the rubber component (A).

The filler (C) is not limited. Examples include silica, carbon black, clay, alumina, talc, mica, kaolin, glass balloon, glass beads, calcium carbonate, magnesium carbonate, magnesium hydroxide, calcium carbonate, magnesium oxide, titanium oxide, potassium titanate, and barium sulfate.

Of these fillers (C), silica is preferable in terms of achieving the effects such as reducing rolling resistance and improving wet performance without impairing the flexibility of the rubber component (A). The inclusion of silica in the rubber composition can provide sufficient reinforcement and low heat generating property without impairing the flexibility in a state where the diene-based rubber of the rubber component (A) and the additive component (B) are dispersed favorably.

The types of silica that can be included in the filler (C) are, for example, wet silica (hydrated silica), dry silica (silicic anhydride), calcium silicate, and aluminum silicate. Of these, wet silica is suitable. The wet silica preferably has a BET specific surface area of 40 to 350 $m^2$/g. Silica whose BET specific surface area is in this range has the advantage of achieving both rubber reinforcement and dispersibility in the rubber component (A). From this viewpoint, silica whose BET specific surface area is in a range of 80 to 300 $m^2$/g is further preferable. Examples of such silica include commercially available products such as trade name "Nipsil AQ" and "Nipsil KQ" made by Tosoh Silica Corporation and trade name "ULTRASIL VN3" made by Degussa AG. These silicas may be used singly or in combination of two or more.

As mentioned above, the rubber composition preferably contains silica as the filler (C). The content of the silica is preferably in a range of 40 to 70 parts by mass and more preferably in a range of 45 to 60 parts by mass with respect to 100 parts by mass of the rubber component (A). If the content of the silica is 40 parts by mass or more with respect to 100 parts by mass of the rubber component (A), the loss tangent (tan$\delta$) of the rubber composition at 60°C decreases, and the fuel efficiency of the tire using the rubber composition during normal driving is improved. If the content of the silica is 70 parts by mass or less with respect to 100 parts by mass of the rubber component (A), the rubber composition has high flexibility, and the use of the rubber composition in the tread rubber of the tire increases the deformation volume of the tread rubber, thus improving the wet performance of the tire. In the filler (C), if the content of the silica is 50 mass% or more, preferably 70 mass% or more, and further preferably 90 mass% or more, wet performance is further improved.

The rubber composition preferably includes carbon black as the filler (C). The content of the carbon black is preferably in a range of 1 to 100 parts by mass and further preferably in a range of 30 to 80 parts by mass with respect to 100 parts by mass of the rubber component (A). If the content of the carbon black is 1 parts by mass or more, the rigidity of the rubber composition is improved. If the content of the carbon black is 100 parts by mass or less, an increase in loss tangent (tan$\delta$) is suppressed. The use of such a rubber composition in the tread rubber of the tire achieves both the fuel efficiency and wet performance of the tire at high level. The carbon black is not limited. Examples include GPF, FEF, HAF, ISAF, and SAF-grade carbon blacks. Of these, ISAF and SAF-grade carbon blacks are preferable in terms of improving the wet performance of the tire. These carbon blacks may be used singly or in combination of two or more.

It is preferable to include, as the carbon black, carbon black whose nitrogen adsorption specific surface area is 110 $m^2$/g or more and carbon black whose nitrogen adsorption specific surface area is 80 $m^2$/g or less. The inclusion of carbon black whose nitrogen adsorption specific surface area is 110 $m^2$/g or more ensures high level of wet performance, and the simultaneous inclusion of carbon black whose nitrogen adsorption specific surface area is 80 $m^2$/g or less ensures the elastic modulus of the tire and improves steering stability.

In the case where the rubber composition includes silica as the filler (C), it is preferable to further include a silane coupling agent in order to improve the reinforcement and low heat generating property of the contained silica.

Examples of the silane coupling agent include bis(3-triethoxysilylpropyl)tetrasulfide, bis(3-triethoxysilylpropyl)trisulfide, bis(3-triethoxysilylpropyl)disulfide, bis(2-triethoxysilylethyl)tetrasulfide, bis(3-trimethoxysilylpropyl)tetrasulfide, bis(2-trimethoxysilylethyl)tetrasulfide, 3-mercaptopropyltrimethoxysilane, 3-mercaptopropyltriethoxysilane, 2-mercaptoethyltrimethoxysilane, 2-mercaptoethyltriethoxysilane, 3-trimethoxysilylpropyl-N,N-dimethylthiocarbamoyltetrasulfide, 3-triethoxysilylpropyl-N,N-dimethylthiocarbamoyltetrasulfide, 2-triethoxysilylethyl-N,N-dimethylthiocarbamoyltetrasulfide, 3-trimethoxysilylpropylbenzothiazyltetrasulfide, 3-triethoxysilylpropylbenzothiazyltetrasulfide, 3-triethoxysilylpropylmethacrylatemonosulfide, 3-trimethoxysilylpropylmethacrylatemonosulfide, bis(3-diethoxymethylsilylpropyl)tetrasulfide, 3-mercaptopropyldimethoxymethylsilane, dimethoxymethylsilylpropyl-N,N-dimethylthiocarbamoyltetrasulfide, and dimethoxymethylsilylpropylbenzothiazolyltetrasulfide. As the silane coupling agent, bis(3-triethoxysilylpropyl)trisulfide and 3-trimethoxysilylpropylbenzothiazyltetrasulfide are particularly suitable in terms of the reinforcement improving effect and the like.

These silane coupling agents may be used singly or in combination of two or more.

The preferable content of the silane coupling agent in the rubber composition differs depending on the type of the silane coupling agent and the like, but the content of the silane coupling agent is preferably in a range of 2 to 25 mass% with respect to the silica. If the content of the silane coupling agent is less than 2 mass%, the effect of the coupling agent is insufficient. If the content of the silane coupling agent is more than 25 mass%, there is a possibility that gelation of the rubber component (A) occurs.

The content of the silane coupling agent is more preferably in a range of 2 to 20 mass%, further preferably in a range of 5 to 18 mass%, and particularly preferably in a range of 5 to 15 mass%, in terms of the effect of the coupling agent, gelation prevention, and the like.

[Other components]

The rubber composition preferably further includes fatty acid metal salt, other than the above-mentioned rubber component (A), additive component (B), and optional filler (C). Examples of the metal used in the fatty acid metal salt include Zn, K, Ca, Na, Mg, Co, Ni, Ba, Fe, Al, Cu, and Mn. Of these, Zn is preferable. Examples of the fatty acid used in the fatty acid metal salt include saturated or unsaturated fatty acids having straight-chain, branched, or cyclic structure with a carbon number of 4 to 30, and mixtures thereof. Of these, saturated or unsaturated straight-chain fatty acid with a carbon number of 10 to 22 is preferable. Examples of the saturated straight-chain fatty acid with a carbon number of 10 to 22 include lauric acid, myristic acid, palmitic acid, and stearic acid. Examples of the unsaturated straight-chain fatty acid with a carbon number of 10 to 22 include oleic acid, linoleic acid, linolenic acid, and arachidonic acid. These fatty acid metal salts may be used singly or in combination of two or more.

The content of the fatty acid metal salt is preferably in a range of 0.1 to 10 parts by mass and further preferably in a range of 0.5 to 5 parts by mass with respect to 100 parts by mass of the rubber component (A).

The rubber composition may further include compounding agents typically used in the rubber industry, such as stearic acid, an antioxidant, zinc oxide, a vulcanization accelerator, a vulcanization acceleration aid, and a vulcanizing agent, which may be selected as appropriate without affecting the object of the present disclosure, within a range of normal amount. Commercially available products are suitably used as these compounding agents. The rubber composition can be manufactured by a known method, such as mixing the rubber component (A) with the additive component (B), the optional filler (C), and various compounding agents optionally selected as appropriate and subjecting the mixture to kneading, warming, extrusion, etc.

The vulcanizing agent is, for example, sulfur.

The content of the vulcanizing agent is, as sulfur content, preferably in a range of 0.1 to 10.0 parts by mass and further preferably in a range of 1.0 to 4.0 parts by mass with respect to 100 parts by mass of the rubber component (A). If the content of the vulcanizing agent as sulfur content is 0.1 parts by mass or more, the fracture strength, wear resistance, and the like of the vulcanized rubber are ensured. If the content of the vulcanizing agent as sulfur content is 10.0 parts by mass or less, sufficient rubber elasticity is ensured. In particular, if the content of the vulcanizing agent as sulfur content is 4.0 parts by mass or less, the wet performance of the tire is further improved, thus enhancing the advantageous effects of the present disclosure.

The vulcanization accelerator is not limited. Examples of the vulcanization accelerator include thiazole vulcanization accelerators such as 2-mercaptobenzothiazole (M), dibenzothiazyl disulfide (DM), and N-cyclohexyl-2-benzothiazyl sulfonamide (CZ), and guanidine vulcanization accelerators such as 1,3-diphenylguanidine (DPG). The rubber composition according to the present disclosure preferably includes three types of vulcanization accelerators, as mentioned above.

The content of the vulcanization accelerator is preferably in a range of 0.1 to 5.0 parts by mass and further preferably in a range of 0.2 to 3.0 parts by mass with respect to 100 parts by mass of the rubber component (A).

The method of using the tread surface rubber layer made of the rubber composition in the tread rubber may be a known method. For example, the tread surface rubber layer made of the rubber composition is used in at least the part of the tread rubber located at the tread rubber surface to form a green tire, and the green tire is vulcanized by a usual method to thus manufacture a tire.

[Tread inside rubber layer]

The rubber composition of the tread inside rubber layer of the tread rubber in this embodiment is not limited, as long as its 100% modulus is lower than the 100% modulus of the rubber composition of the tread surface rubber layer as mentioned above. For example, the following rubber composition may be used.

The rubber composition of the tread inside rubber layer may be set to, for example, natural rubber (NR) : butadiene rubber (BR) = 50 phr : 50 phr to 90 phr : 10 phr in phr (the number of parts per 100 parts of the rubber component). The rubber composition of the tread inside rubber layer preferably contains 30 to 60 phr of carbon black. Further preferably, the rubber composition of the tread inside rubber layer does not contain the additive component (B) included in the rubber composition of the tread surface rubber layer and in particular the thermoplastic resin in the additive component (B), in terms of rolling resistance.

[Tread pattern]

The tire 1 in Embodiment 1 includes the tread rubber 23, and can have the following tread pattern described with reference to FIG. 2.

The tire 1 according to the present disclosure, as long as it includes the tread rubber 23, may have any tread pattern, such as a full lug pattern having lug grooves provided on the entire circumference of the tire 1, a block pattern composed of a plurality of blocks defined by grooves extending in the tire circumferential direction and grooves extending in the tire width direction, or a rib pattern having rib-like land portions defined by grooves extending in the tire circumferential direction as illustrated in FIG. 2.

The tire 1 in Embodiment 1 includes at least one rib-like land portion 3 in the tread surface T, as illustrated in FIG. 2. In detail, the rib-like land portion 3 is defined by a tread ground contact edge E and a circumferential main groove 4 continuously extending in the tire circumferential direction, or defined by two circumferential main grooves 4 continuously extending in the tire circumferential direction and adjacent to each other. In the illustrated example, two circumferential main grooves 4 are provided in the tread surface T. Hence, one pair of rib-like land portions (hereafter also referred to as "shoulder rib-like land portions") 3s are defined by one tread ground contact edge E and one circumferential main groove 4 on each shoulder side on the tire widthwise outer side, and one rib-like land portion (hereafter also referred to as "center rib-like land portion") 3s is defined by the two circumferential main grooves 4 on the center side on the tire widthwise inner side. Although the circumferential main grooves 4 illustrated in FIG. 2 extend linearly along the tire circumferential direction, the circumferential main grooves 4 may extend in a zigzag shape, a wavy shape, or the like, as long as they continuously extend in the tire circumferential direction.

In this embodiment, the rib-like land portion 3 has no both-end open sipe cutting across the rib-like land portion 3. In detail, the rib-like land portion 3 has no both-end open sipe having both ends open to the tread ground contact edge E and the circumferential main groove 4 or open to the two circumferential main grooves 4. In this embodiment, the rib-like land portion 3 may have any groove or sipe as long as it does not cut across the land portion. In the case where there are a plurality of rib-like land portions 3, it is preferable that all rib-like land portions 3 have no both-end open sipe as in the illustrated example. Alternatively, at least one rib-like land portion 3 may have no both-end open sipe.

The rib-like land portion 3 has a one-end open sipe 5 having one end open to the circumferential main groove 4 or the tread ground contact edge E and the other end terminating within the rib-like land portion 3. In detail, one end of the one-end open sipe 5 is open to one of the two circumferential main grooves 4, or open to one of the tread ground contact edge E and the circumferential main groove 4.

In Embodiment 1, a one-end open sipe 5c provided in the rib-like land portion 3, i.e. the center rib-like land portion 3c in the illustrated example, includes: a circumferential sipe portion 5c1 extending from the other end of the one-end open sipe 5c in the tire circumferential direction and preferably at an inclination angle of 30° or less with respect to the tire circumferential direction; and a widthwise sipe portion 5c2 extending from the circumferential sipe portion 5c1 in the tire width direction and preferably at an inclination angle of 30° or less with respect to the tire width direction, and open to the circumferential main groove 4. The opening of the widthwise sipe portion 5c2 of the one-end open sipe 5c to the circumferential main groove 4 is the one end of the one-end open sipe 5c. In the case where the one-end open sipe 5c is provided in the shoulder rib-like land portion 3s, the widthwise sipe portion is open to the circumferential main groove or the tread ground contact edge E.

A plurality of one-end open sipes 5 are arranged in the tire circumferential direction. In each of the land portion halves on both widthwise sides of the widthwise centerline of the rib-like land portion 3, one-end open sipes 5 are arranged in the tire circumferential direction with a predetermined pitch length L. In the center rib-like land portion 3c, the one-end open sipes 5c in one row and the one-end open sipes 5c in the other row may differ in position from each other in the tire circumferential direction, and be point-symmetric. The pitch length L may be fixed in the tire circumferential direction, or variable in the tire circumferential direction. In the example illustrated in FIG. 2, the pitch length L of the one-end open sipes 5c is changed on the tire circumference to form patterns P1 to P3. The pitch length increases relatively in the order of the patterns P1 to P3 in FIG. 2. The patterns P1 to P3 alternate on the tire circumference in the tread pattern illustrated in FIG. 2. Although three patterns that differ in the pitch length L are illustrated in the example in FIG. 2, two patterns or four or more patterns may be used. Although the patterns P1 to P3 alternate in the example in FIG. 2, the patterns may be arranged in any order. For example, a plurality of repetitions of one pattern may be followed by one or more repetitions of another pattern.

The rib-like land portion 3 has a both-end closed sipe 6 having both ends terminating within the rib-like land portion 3 and not open directly or indirectly to the circumferential main groove 4 or the tread ground contact edge E (i.e. not communicating with the circumferential main groove 4 or the tread ground contact edge E through other sipe(s) or groove(s)). In the illustrated example, a both-end closed sipe 6c in the center rib-like land portion 3c is a circular sipe, i.e. a circular small hole, in a tread surface T view, and is located on the widthwise outer side of the rib-like land portion 3c with respect to the circumferential sipe portion 5c1 of the one-end open sipe 5c. Meanwhile, a both-end closed sipe 6s in the shoulder rib-like land portion 3s is formed as a circular sipe and a curved sipe in a tread surface T view.

The functions and effects of the tread pattern in Embodiment 1 are described below.

In the tire 1 in Embodiment 1, the rib-like land portion 3 has no groove cutting across the land portion 3. This improves the land portion rigidity in the circumferential direction (circumferential shearing rigidity) of the tire 1, and increases the frictional force of the tire 1 against the road surface, with it being possible to further improve wet performance.

In this embodiment, the rib-like land portion 3 has no both-end open sipe cutting across the rib-like land portion 3. Hence, high circumferential rigidity of the rib-like land portion 3 can be maintained to achieve high wet performance.

In this embodiment, the rib-like land portion 3 has the one-end open sipe 5. Therefore, while maintaining high circumferential rigidity of the rib-like land portion 3, in a state where the tire 1 is in contact with a wet road surface, the one-end open sipe 5 can remove any water film between the road surface and the tire 1 and increase the actual footprint area between the tread surface T and the road surface. As a result, wet performance can be improved more sufficiently.

In the case where the one-end open sipe 5c includes the circumferential sipe portion 5c1 and the widthwise sipe portion 5c2 as in the center rib-like land portion 3c, the circumferential sipe portion 5c1 serves to effectively reduce the compression rigidity (tire radial rigidity) of the tread and increase the actual footprint area while maintaining the circumferential rigidity of the rib-like land portion 3, and the widthwise sipe portion 5c2 open to the circumferential main groove 4 or the like serves to remove any water film that could be present between the road surface and the tire 1 as mentioned above. As a result, wet performance can be improved more sufficiently.

In this embodiment, the rib-like land portion 3 has the both-end closed sipe 6. This reduces compression rigidity, while preventing a decrease in circumferential rigidity or the like caused by an opening of a sipe end to the circumferential main groove 4 or the like. The actual footprint area can thus be increased to further improve wet performance.

Although the one-end open sipe 5c including the circumferential sipe portion 5c1 and the widthwise sipe portion 5c2 is provided only in the rib-like land portion 3 defined by two circumferential main grooves 4, e.g. the center rib-like land portion 3c, in terms of cornering performance in the illustrated example, the one-end open sipe 5 including the circumferential sipe portion 5c1 and the widthwise sipe portion 5c2 may be provided in the shoulder rib-like land portion 3s in addition to the center rib-like land portion 3c, or provided only in the shoulder rib-like land portion 3s.

In this embodiment, preferably, the one-end open sipes 5c in the center rib-like land portion 3c are arranged with the predetermined pitch length L (mm) measured along the tire circumferential direction, and the land portion width W (mm) of the land portion 3c, the tire widthwise sipe component total length Ws (mm) of the one-end open sipes 5c within one pitch area of the pitch length L (mm) in the land portion 3c, the pitch length L (mm), and the tire circumferential sipe component total length Ls (mm) of the one-end open sipes 5c within one pitch area of the pitch length L (mm) in the land portion 3c satisfy the relationships:

$$0.4W \leq Ws \leq 1.2W, \text{ and } 0.6L \leq Ls \leq 3L.$$

With this structure, while maintaining the adhesion limit by suppressing a decrease in circumferential shearing rigidity, compression rigidity can be reduced to improve the actual road footprint area. Wet performance can thus be improved. In detail, drainage performance can be improved by setting the tire widthwise sipe component total length Ws (mm) within one pitch area of the pitch length L (mm) to be 0.4 times or more the land portion width W (mm), and a decrease in circumferential shearing rigidity can be suppressed by setting the tire widthwise sipe component total length Ws (mm) within one pitch area of the pitch length L (mm) to be 1.2 times or less the land portion width W (mm). Moreover, compression rigidity can be sufficiently reduced by setting the tire circumferential sipe component total length Ls (mm) within one pitch area of the pitch length L (mm) to be 0.6 times or more the pitch length L (mm), and sufficient cornering power can be maintained by setting the tire circumferential sipe component total length Ls (mm) within one pitch area of the pitch length L (mm) to be 3 times or less the pitch length L (mm). A decrease in steering stability can be suppressed in this way. The inclusion of such tread rubber 23 contributes to higher cornering power than a tire including a typical tread rubber, and thus improves steering stability. Since steering stability is favorable, a decrease in steering stability can be suppressed even when the tire circumferential sipe component Ls is increased.

In the example in FIG. 2, the patterns in which the pitch length L of the one-end open sipes 5c is changed on the tire circumference are used. Here, at least in the center rib-like land portion 3c, the one-end open sipes 5c arranged with the pitch length L (mm) satisfy $0.4W \leq Ws \leq 1.2W$ and $0.6L \leq Ls \leq 3L$ in all of the patterns P1 to P3.

Here, the "pitch length L" is the length from one tire circumferential end of one one-end open sipe to the corresponding tire circumferential end of a one-end open sipe adjacent to the one-end open sipe in the tire circumferential direction, measured along the tire circumferential direction on a developed view. The "land portion width W" is the length of the land portion measured along the tire width direction. The "tire widthwise sipe component total length Ws of the one-end open sipes within one pitch area of the pitch length L in the land portion" is the length measured along the tire width direction by projecting, in the tire circumferential direction, the one-end open sipes within one pitch area of the pitch length L in the land portion. In the case where, when projecting the one-end open sipe(s) within this area in the tire circumferential direction, there is an overlapping portion of the projected one-end open sipe(s) as, for example, in the case where a plurality of one-end open sipes are present or a one-end open sipe bends, the length is calculated by multiplying the overlapping portion by the number of elements overlapping each other. The "tire circumferential sipe component total length Ls of the one-end open sipes within one pitch area of the pitch length L in the land portion" is the length measured along the tire circumferential direction by projecting, in the tire width direction, the one-end open sipes within one pitch area of the pitch length L in the land portion. As with the "tire widthwise sipe component total length Ws", in the case where there is an overlapping portion of the projected one-end open sipe(s), the length is calculated by multiplying the overlapping portion by the number of elements overlapping each other.

In this embodiment, preferably, in the center rib-like land portion 3c in which the one-end open sipe 5c is provided, at least one both-end closed sipe 6c is provided within one pitch area of the pitch length L (mm), and the opening area S ($mm^2$) of the both-end closed sipe 6c to the tread surface is in a range of $0.1 \leq S \leq 4$. More preferably, the both-end closed sipe 6c is a small hole.

With this structure, compression rigidity can be reduced while maintaining circumferential shearing rigidity, with it being possible to further improve wet performance, as mentioned above. In the center rib-like land portion 3c, if only the one-end closed sipes 5c are present, for example, a block-shaped portion surrounded by the one-end closed sipes 5c is formed in the land portion 3c. By providing the both-end closed sipe 6c in such a block-shaped portion, however, compression rigidity can be reduced uniformly.

In the case where a plurality of both-end closed sipes 6c are arranged within one pitch area of the pitch length L (mm), the opening area S ($mm^2$) is the average value of the plurality of both-end closed sipes 6c.

In the example in FIG. 2, two both-end closed sipes (small holes in this example) 6c are provided within one pitch area of the pitch length L (mm) in the patterns P1 and P2, whereas three both-end closed sipes 6c are provided within one pitch area of the pitch length L (mm) in the pattern P3.

In this embodiment, in the center rib-like land portion 3c in which the one-end open sipe 5c is provided, the relationship between the pitch length L (mm) and the number N of both-end closed sipes 6c within one pitch area of the pitch length L (mm) is preferably $0.1 \leq N/L \leq 0.3$.

With this structure, wet performance can be further improved. In detail, by setting N/L (number/mm) to 0.1 or more, compression rigidity can be reduced sufficiently. By setting N/L (number/mm) to 0.3 or less, a decrease in the area of the center rib-like land portion 3c can be prevented and a decrease in cornering power can be prevented.

In the tire 1 illustrated in FIG. 2, two circumferential main groove 4 are provided in the tread surface T to form three rib-like land portions 3. Alternatively, three or more circumferential main grooves 4 may be provided in the tread surface T, where part or all of the plurality of land portions defined by the three or more circumferential main grooves 4 and the tread ground contact edges E are set as rib-like land portions 3 in which sipes according to the present disclosure are provided.

Although each rib-like land portion 3 has both the one-end open sipe 5 and the both-end closed sipe 6 in FIG. 2, the rib-like land portion 3 may have only one of the one-end open sipe 5 and the both-end closed sipe 6.

In this embodiment, each sipe is preferably a sipe (two-dimensional sipe) linearly extending in the depth direction, in terms of enhancing drainage performance. However, the sipe may be a sipe (three-dimensional sipe) extending in the depth direction in a bent shape such as zigzag.

In this embodiment (Embodiment 1), the rib-like land portion 3 preferably has no both-end open sipe as mentioned above. As a modification of Embodiment 1, however, part or all of the rib-like land portions 3 may have a both-end open sipe extending in the depth direction in a bent shape such as zigzag.

In this embodiment, the tire size is not limited. It is, however, preferable to use a passenger vehicle pneumatic tire having the following size.

Preferably, in a state where the tire is attached to the rim, applied with an internal pressure of 250 kPa or more, and placed under no load, the ratio SW/OD between the sectional width SW (mm) and outer diameter OD (mm) of the tire is 0.26 or less in the case where the sectional width SW of the tire is less than 165 (mm), and the sectional width SW (mm) and outer diameter OD (mm) of the tire satisfy the relationship:

$$2.135 \times SW + 282.3 \leq OD$$

in the case where the sectional width SW of the tire is 165 (mm) or more (hereafter, the tire size in this relationship is also referred to as "narrow-width, large-diameter size"). The tire satisfying this relationship has a narrow-width, large-diameter shape. Thus, the tire can be improved in rolling resistance performance (reduced in rolling resistance coefficient), and reduced in weight.

The internal pressure during rolling of the tire is preferably 250 kPa or more, and more preferably 250 to 350 kPa. In the tire with the narrow-width, large-diameter size, the ground contact length tends to increase. Limiting the internal pressure to 250 kPa or more can suppress an increase in ground contact length, and so reduce the deformation of the tread rubber and further reduce rolling resistance.

In terms of reducing the rolling resistance coefficient of the tire and reducing the weight of the tire, in the case where the internal pressure during rolling of the tire is 250 kPa or more, the sectional width SW (mm) and outer diameter OD (mm) of the tire 1 preferably satisfy the relationship $-0.0187 \times SW^2 + 9.15 \times SW - 380 \leq OD$.

The "sectional width SW" and "outer diameter OD" of the tire are respectively the sectional width and outer diameter defined in JIS D 4202-1994, in a state where the tire is attached to the rim, applied with an internal pressure of 250 kPa or more, and placed under no load.

The pneumatic tire having the tread surface rubber layer made of the predetermined rubber composition in this embodiment can be manufactured by any of various manufacturing methods. The manufacturing method for the tire is not limited. As an example, the tread portion having the tread rubber including the tread surface rubber layer and the portions other than the tread portion may be assembled and vulcanized together to yield a product tire. As another example, after manufacturing only the tread portion having the tread rubber including the tread surface rubber layer according to the present disclosure by vulcanization, the tread portion may be assembled with the portions other than the tread portion to yield a product tire. As another example, after removing a tread portion from a used tire, the tread portion having the tread rubber including the tread surface rubber layer according to the present disclosure may be newly assembled with the other portions of the tire to yield a product tire.

While Embodiment 1 of the present disclosure has been described above with reference to drawings, the pneumatic tire according to the present disclosure is not limited to the foregoing example, and may be changed as appropriate as described below.

Examples of the tire size of the pneumatic tire according to the present disclosure include 105/50R16, 115/50R17, 125/55R20, 125/60R18, 125/65R19, 135/45R21, 135/55R20, 135/60R17, 135/60R18, 135/60R19, 135/65R19, 145/45R21, 145/55R20, 145/60R16, 145/60R17, 145/60R18, 145/60R19, 145/65R19, 155/45R18, 155/45R21, 155/55R18, 155/55R19, 155/55R21, 155/60R17, 155/65R13, 155/65R18, 155/70R17, 155/70R19, 165/45R22, 165/55R16, 165/55R18, 165/55R19, 165/55R20, 165/55R21, 165/60R19, 165/65R19, 165/70R18, 175/45R23, 175/55R18, 175/55R19, 175/55R20, 175/55R22, 175/60R18, 175/65R15, 185/45R22, 185/50R16, 185/50R20, 185/55R19, 185/55R20, 185/60R17, 185/60R19, 185/60R20, 195/50R20, 195/55R20, 195/60R19, 195/65R17, 205/50R21, 205/55R16, 205/55R20, 205/60R16, 205/60R18, 215/50R21, 215/60R17, and 225/65R17.

In the present disclosure, it is preferable to reduce the amount of groove occupying the tread, in terms of achieving both wet performance and other performance. In detail, the groove volume ratio (groove volume V2/tread rubber volume VI) is preferably 20% or less, and the negative ratio (the ratio of the groove area to the tread surface area) is preferably 20% or less. These values are lower than standard values in passenger vehicle pneumatic radial tires of conventional size.

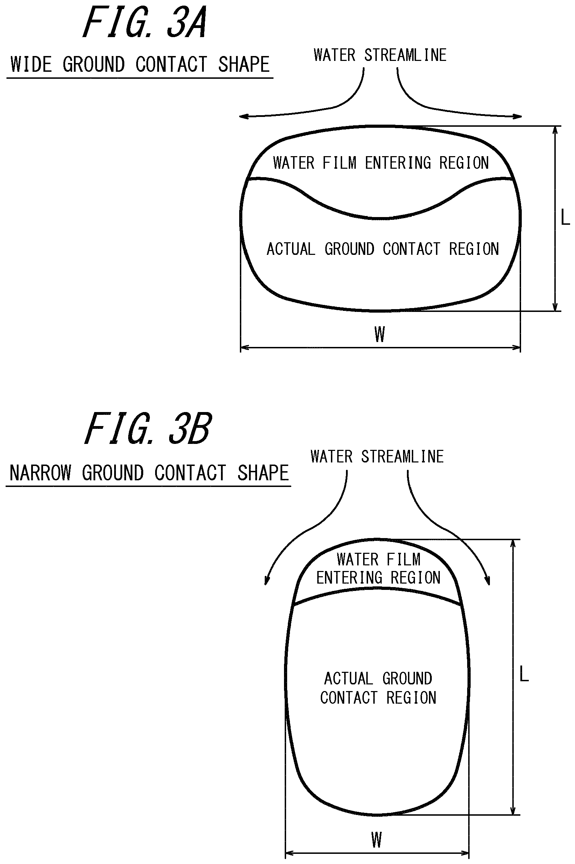

A typical way of improving wet performance is to increase the amount of groove. In the case of the pneumatic tire with the narrow-width, large-diameter size, however, the width W of the footprint decreases, so that water tends to be discharged in the tire width direction, as illustrated in FIG. 3B in comparison with FIG. 3A. Accordingly, even when the amount of groove is reduced, wet performance can be maintained, and also the land portion rigidity can be improved to improve other performance such as cornering power.

For example, the groove volume ratio is defined as ratio V2/V1, where VI is the volume of the tread rubber that is located on the tire widthwise inner side of both widthwise ends of the maximum width belt layer having the maximum width in the tire width direction from among the belt layers and located on the tire radial outer side of the tire radial outermost reinforcement member (belt layer and belt reinforcing layer) at the tire widthwise center position, and V2 is the total volume of the groove formed in the tread surface.

In the present disclosure, in the case where the vehicle installation direction of the tire is designated, the negative ratio may be different between the tire widthwise halves on the vehicle-installed inside and the vehicle-installed outside with the tire equatorial plane CL as the boundary.

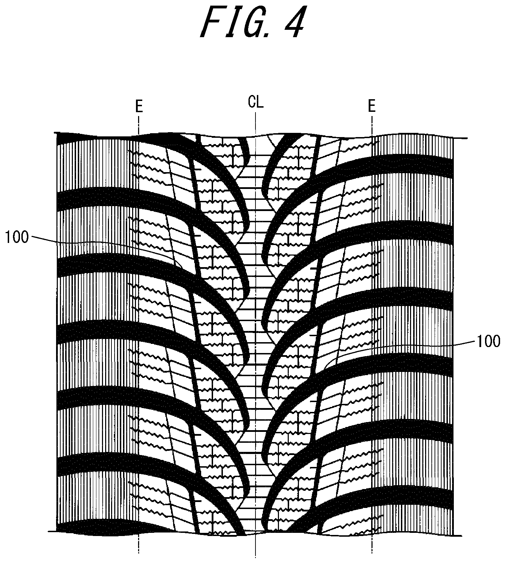

In the present disclosure, a pattern having widthwise grooves 100 extending in the tire width direction from the vicinity of the tire equatorial plane CL to the tread ground contact edge E may be used, as illustrated in FIG. 4. In this case, the circumferential main grooves may be omitted. Such a pattern mainly composed of widthwise grooves 100 has particularly effective on-snow performance.

In the present disclosure, various structures may be employed for each shoulder rib-like land portion, from among the rib-like land portions, that is defined by the circumferential main groove on the tire widthwise outermost side and the tread ground contact edge E. For example, in a tire for which the vehicle installation direction is designated, the tire widthwise width of the shoulder rib-like land portion may be different between the vehicle-installed outside and inside. In terms of steering stability, it is preferable to set the tire widthwise width of the shoulder rib-like land portion on the vehicle-installed outside to be greater than the tire widthwise width of the shoulder rib-like land portion on the vehicle-installed inside.

In the case of the pneumatic tire with the narrow-width, large-diameter size, a one-end open groove extending from the circumferential main groove to the vehicle-installed inside when installing the tire on the vehicle is preferably provided, in terms of suppressing buckling and improving cornering power.

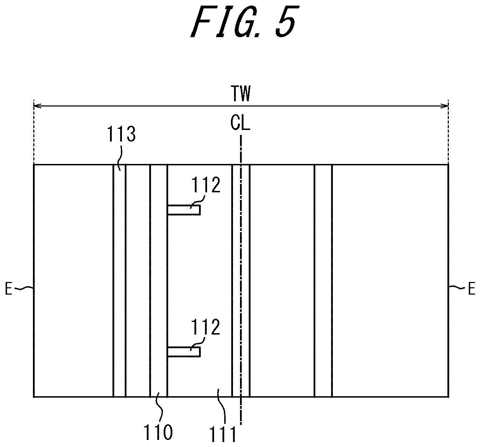

In detail, it is preferable that, in at least one of the halves having the tire equatorial plane CL as their boundary in the tread surface T, a tread edge-side main groove 110 extending in the tread circumferential direction and adjacent to the tread ground contact edge E with the distance from the tread ground contact edge E in the tread width direction being 25% or more of the tread width TW is formed, and one of the land portions 111 adjacent to the tread ground contact edge-side land portion defined by the tread edge-side main groove 110 and the tread ground contact edge E has at least one one-end open groove 112 extending from the tread ground contact edge-side main groove 110 in the tread width direction and terminating within the adjacent land portion 111, as illustrated in FIG. 5. A groove 113 in FIG. 5 is a shallow groove whose groove depth is less than that of the main groove.

In the case of the pneumatic tire with the narrow-width, large-diameter size, compression stress acts on the vehicle-installed outside and tensile stress acts on the vehicle-installed inside. These stresses cause the tread rubber and the belt to deform, as a result of which the contact patch rises upward.

In view of this, the one-end open groove 112 extending from the tread ground contact edge-side main groove 110 in the tread width direction and terminating within the land portion 111 is provided. Since the one-end open groove 112 is closed by compression stress on the vehicle-installed outside in the land portion, the deformation of the tread and the belt due to compression stress is suppressed as compared with the case where the one-end open groove 112 is not provided or the case where the one-end open groove 112 does not extend to the vehicle-installed outside.

Moreover, since the one-end open groove 112 terminates within the land portion, rigidity against tensile stress increases on the vehicle-installed inside, as compared with the case where the one-end open groove 112 extends to the vehicle-installed inside. The deformation of the tread and the belt is therefore suppressed.

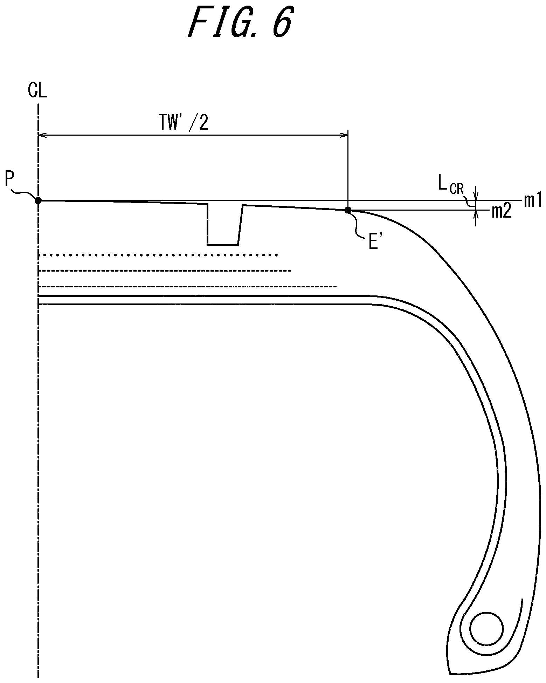

In the case of the pneumatic tire with the narrow-width, large-diameter size, the ratio $L_{CR}/TW'$ is preferably 0.045 or less, where $L_{CR}$ is a drop height which is the tire radial distance between a straight line m1 through a point P on the tread surface in the tire equatorial plane CL and in parallel with the tire width direction and a straight line m2 through the ground contact edge E' and in parallel with the tire width direction in a tire widthwise cross section, and TW' is the tread width of the tire, as illustrated in FIG. 6. By limiting the ratio $L_{CR}/TW'$ to this range, the crown portion of the tire is flattened (planarized), thus increasing the footprint area and relieving the input of force (pressure) from the road surface. Hence, the deflection rate in the tire radial direction can be reduced to improve the durability and wear resistance performance of the tire.

The "ground contact edge E' " denotes, when the tire is attached to the rim, applied with the maximum air pressure prescribed for the vehicle on which the tire is installed, put upright on a flat plate, and placed under a weight corresponding to the maximum load prescribed for the vehicle in which the tire is installed, both tire widthwise end points in the contact surface with the flat plate.

In the present disclosure, the tread rubber may be formed of a plurality of rubber layers different in the tire width direction. The plurality of rubber layers may differ in loss tangent, modulus, hardness, glass transition temperature, material, or the like.

The tire according to the present disclosure preferably has an inclined belt layer composed of a cord layer coated with rubber that extends while inclining with respect to the tire circumferential direction. In this case, the inclined belt layer may be made up of only one layer. In the passenger vehicle tire with the narrow-width, large-diameter size, however, the footprint shape upon cornering is easily distorted if the inclined belt layer is made up of only one layer. Therefore, it is preferable to adopt an inclined belt layer extending in the direction in which the cords intersect between two or more layers. In the pneumatic tire according to the present disclosure, a belt structure in which two belt layers form an inclined belt layer is most preferable.

In the present disclosure, the tire widthwise width of the maximum width inclined belt layer having the widest width in the tire width direction is preferably 90% to 115% of the tread width TW, and particularly preferably 100% to 105% of the tread width TW.

In the present disclosure, metal cords and in particular steel cords are most commonly used as the belt cords of the inclined belt layer. However, organic fiber cords may also be used. The steel cords may include steel as a main component, and also contain various micro inclusions such as carbon, manganese, silicon, phosphorous, sulfur, copper, and chromium.

In the present disclosure, the belt cords of the inclined belt layer may use monofilament cords or cords obtained by twisting a plurality of filaments. Various designs may be adopted for the twist structure, which may be different in, for example, sectional structure, twist pitch, twist direction, and/or distance of adjacent filaments. Cords obtained by twisting filaments of different materials may also be used, which may employ various twist structures such as single twist, layer twist, and multi twist without being limited to any particular sectional structure.

In the present disclosure, the inclination angle of the belt cords of the inclined belt layer is preferably 10° or more with respect to the tire circumferential direction.

In the present disclosure, the inclination angle of the belt cords of the inclined belt layer is preferably a high angle, specifically 35° or more with respect to the tire circumferential direction, and particularly in a range of 55° to 85° with respect to the tire circumferential direction.

By setting the inclination angle to 35° or more, the rigidity with respect to the tire width direction is increased, and steering stability especially upon cornering is improved. In addition, the shearing deformation of the rubber between layers is reduced, and rolling resistance performance is improved.

The tire according to the present disclosure may have a circumferential belt formed of one or more circumferential belt layers on the tire radial outer side of the inclined belt layer.

In the case where the inclination angles $\theta 1$ and $\theta 2$ of the belt cords of the inclined belt layer are 35° or more, the circumferential belt preferably has a tire circumferential rigidity per unit width of the center region C including the tire equatorial plane CL higher than the tire circumferential rigidity per unit width of the other regions.

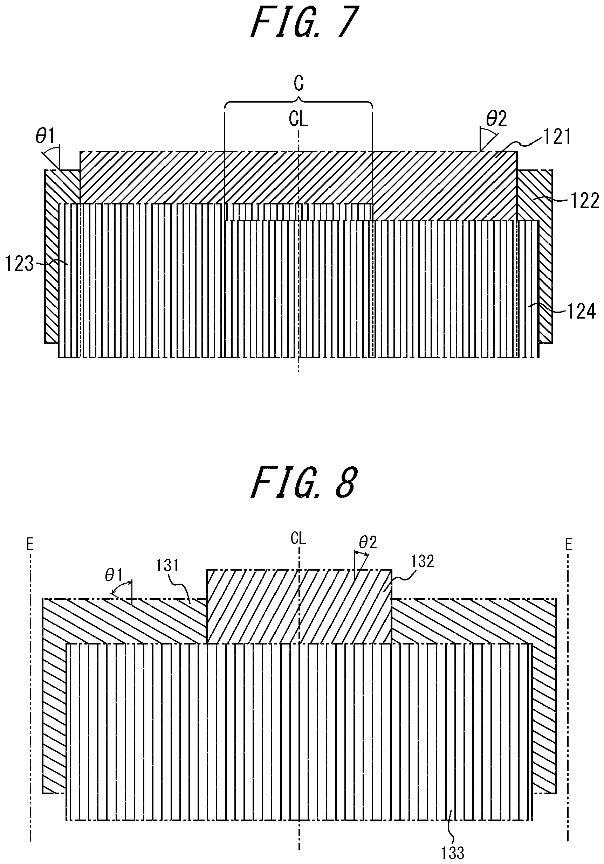

FIG. 7 schematically illustrates an example of the belt structure. In the drawing, circumferential belt layers 123 and 124 are laminated on the tire radial outer side of inclined belt layers 121 and 122, and in the center region C, the circumferential belt layers 123 and 124 overlap with each other in the tire radial direction.

For example, by setting the number of circumferential belt layers in the center region C to be more than in the other regions as illustrated in FIG. 7, the tire circumferential rigidity per unit width of the center region C can be made higher than the tire circumferential rigidity per unit width of the other regions.

In a high frequency region of 400 Hz to 2 kHz, many tires having belt cords of the inclined belt layer inclined at 35° or more with respect to the tire circumferential direction assume such a shape that the tread surface greatly vibrates uniformly in primary, secondary, tertiary, etc. vibration modes in a sectional direction, and thus a large noise emission is generated. Therefore, locally increasing the tire circumferential rigidity of the tire widthwise center region of the tread makes the tire widthwise center region of the tread less prone to expansion in the tire circumferential direction, thereby suppressing expansion of the tread surface in the tire circumferential direction. As a result, noise emission can be reduced.

Furthermore, as mentioned above, in a tire in which the tire circumferential rigidity of the center region including the tire equatorial plane CL has been increased, the tread preferably has a land portion that is continuous in the tire circumferential direction in a region including at least the tire equatorial plane CL of the tread surface. When the circumferential main groove is disposed on the tire equatorial plane CL or the vicinity thereof, the rigidity of the tread in the region could decrease, and drastically shorten the ground contact length in the land portion defining the circumferential main groove. It is therefore preferable to dispose a land portion (rib-like land portion) that is continuous in the tire circumferential direction over a certain region including the tire equatorial plane CL, in terms of improving noise performance without decreasing cornering power.

FIG. 8 schematically illustrates another example of the belt structure. In the drawing, one circumferential belt layer 133 is laminated on the tire radial outer side of two inclined belt layers 131 and 132.

In the present disclosure, in the case where the inclination angle of the belt cords of the inclined belt layer is 35° or more, it is preferable that the inclined belt layer includes at least two inclined belt layers having different tire widthwise widths, and the inclination angle $\theta 1$ of the cords forming the inclined belt layer having the widest width with respect to the tire circumferential direction and the inclination angle $\theta 2$ of the cords forming the inclined belt layer having the narrowest width with respect to the tire circumferential direction satisfy $35° \leq \theta 1 \leq 85°$, $10° \leq \theta 2 \leq 30°$, and $\theta 1 > \theta 2$, as in the example illustrated in FIG. 8.

In a high frequency region of 400 Hz to 2 kHz, many tires provided with inclined belt layers having belt cords inclined at 35° or more with respect to the tire circumferential direction assume such a shape that the tread surface greatly vibrates uniformly in primary, secondary, tertiary, etc. vibration modes in a sectional direction, and thus a large noise emission is generated. Therefore, locally increasing the tire circumferential rigidity of the tire widthwise center region of the tread makes the tire widthwise center region of the tread less prone to expansion in the tire circumferential direction, thereby suppressing expansion of the tread surface in the tire circumferential direction. As a result, noise emission can be reduced.

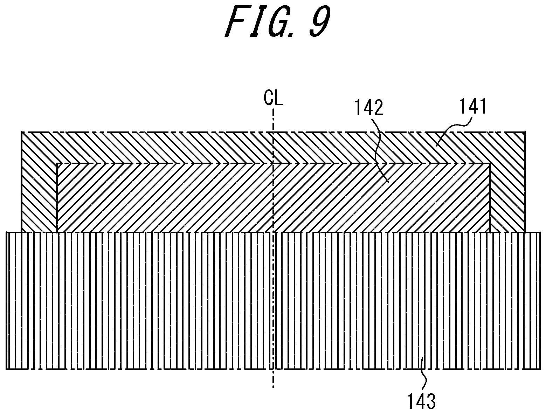

FIG. 9 schematically illustrates another example of the belt structure. In the drawing, one circumferential belt layer 143 is laminated on the tire radial outer side of two inclined belt layers 141 and 142.

In the passenger vehicle tire with the narrow-width, large-diameter size, the circumferential belt layers are preferably highly rigid, and more specifically, preferably formed of a cord layer coated with rubber whose cords extend in the tire circumferential direction, which preferably satisfy $1500 \geq X \geq 750$ where X is defined as $X = Y \times n \times m$, Y is the Young's modulus (GPa) of the cords, n is the number of cords implanted (cords/50mm), and m is the number of circumferential belt layers. The passenger vehicle tire with the narrow-width, large-diameter size is apt to be in a shape which is subjected to local deformation in the tire circumferential direction against input of force from the road surface upon cornering, so that the contact surface is likely to be in a substantially triangular shape, that is, the ground contact length in the circumferential direction greatly changes depending on the position in the tire width direction. In view of this, the circumferential belt layers are formed to have high rigidity, thus improving the ring rigidity of the tire and suppressing deformation in the tire circumferential direction. As a result, deformation in the tire width direction can also be suppressed by the incompressibility of the rubber, making the ground contact shape unlikely to change. Further, the improved ring rigidity promotes eccentric deformation, which simultaneously improves rolling resistance performance. The effect of improving rolling resistance performance is particularly extensive in the pneumatic tire with the narrow-width, large-diameter size.

In the case where the highly rigid circumferential belt layers are used as mentioned above, the belt cords of the inclined belt layer are preferably inclined with respect to the tire circumferential direction at a high angle, specifically 35° or more. The use of the highly rigid circumferential belt layers increases rigidity in the tire circumferential direction, which could inadvertently reduce the ground contact length in some tires. In view of this, belt layers inclined at a high angle may be used to reduce out-of-plane bending stiffness in the tire circumferential direction to increase the elongation of the rubber in the tire circumferential direction upon tread surface deformation, to thereby suppress a decrease in ground contact length.

In the present disclosure, wavy-shaped cords may be used for the circumferential belt layers, in order to increase rupture strength. The rupture strength may similarly be increased by using high-elongation cords (for example, with an elongation at break of 4.5 to 5.5%).

In the present disclosure, various materials may be adopted as the circumferential belt layers. Typical examples include rayon, nylon, polyethylene naphthalate (PEN), polyethylene terephthalate (PET), aramid, glass fiber, carbon fiber, and steel. In terms of weight reduction, organic fiber cords are particularly preferable.

In the present disclosure, the circumferential belt layers may use, as the cords, monofilament cords, cords obtained by twisting a plurality of filaments, or hybrid cords obtained by twisting filaments of different materials.

In the present disclosure, the number of cords implanted of the circumferential belt layers may be in a range of 20 to 60 per 50 mm, without being limited thereto.

In the present disclosure, distributions may be provided in the tire width direction in terms of properties such as rigidity, material, the number of layers, and the density of cords implanted. For example, the number of circumferential belt layers may be increased only in the tire widthwise end. Alternatively, the number of circumferential belt layers may be increased only in the center portion.

In the present disclosure, the circumferential belt layers may be designed to be wider or narrower than the inclined belt layers. For example, the circumferential belt layers may have a tire widthwise width in a range of 90% to 110% of the width of the maximum width inclined belt layer widest in tire widthwise width from among the inclined belt layers.

Here, the circumferential belt layers may be configured as spiral layers, which is particularly advantageous in terms of production.

In the present disclosure, the circumferential belt layers may be omitted.

In the present disclosure, the carcass line may employ various structures. For example, the carcass maximum width position in the tire radial direction may be closer to either the bead portion side or the tread side. For example, the carcass maximum width position may be in a range of 50% to 90% of the tire section height, on the tire radial outer side from the bead base portion.

In the present disclosure, the carcass may also employ various structures. For example, the number of cords in the carcasses may be in a range of 20 to 60 per 50 mm, without being limited thereto.

Furthermore, for example, the carcass may have a folded end positioned on the tire radial inner side relative to the tire radial end of the bead filler. Alternatively, the carcass folded end may be positioned on the tire radial outer side relative to the tire radial outer end of the bead filler or the tire maximum width position, or may be extended, in some cases, to the tire widthwise inner side relative to the tire widthwise end of the inclined belt layer. In the case where the carcass is formed of a plurality of carcass plies, the folded ends of the carcasses may be disposed at different positions in the tire radial direction. Alternatively, without any carcass folded part, the carcass may be inserted between a plurality of bead core members, or wound around the bead core.

In the pneumatic tire with the narrow-width, large-diameter size, the tire side portion is preferably reduced in thickness. The tire side portion may be reduced in thickness in the following manner. For example, the bead filler may be configured to have a tire widthwise cross-sectional area S1 which is 1 times or more and 4 times or less the tire widthwise cross-sectional area S2 of the bead core. Moreover, the ratio Ts/Tb may be 15% or more and 40% or less, where Ts is the gauge of the sidewall portion at the tire maximum width portion, and Tb is the bead width of the bead core at the tire radial center position. Moreover, the ratio Ts/Tc may be 5 or more and 10 or less, where Ts is the gauge of the sidewall portion at the tire maximum width portion, and Tc is the diameter of the carcass cord.

The gauge Ts is the total thickness of all of the members including the rubber, the reinforcement member, and the inner liner. In the case of a structure in which the bead core is divided into a plurality of small bead cores by the carcass, Tb is the distance between the tire widthwise innermost end and outermost end of all of the small bead cores.

In the present disclosure, the tire maximum width position may be in a range of 50% to 90% of the tire section height, on the tire radial outer side from the bead base portion.

The tire according to the present disclosure may include a rim guard.

The tire according to the present disclosure may include no bead filler.

In the present disclosure, the bead core may employ various structures such as a cross-sectional circular shape and a cross-sectional polygonal shape. Further, a structure of winding the carcass around the bead core or a structure of inserting the carcass between a plurality of bead core members may be used.

In the present disclosure, the bead portion may further include, for example, a rubber layer and a cord layer for the purpose of reinforcement and the like. These additional members may be provided at various positions with respect to the carcass and the bead filler.

In the present disclosure, it is preferable to make the inner liner thick, in terms of reducing the vehicle-interior noise of 80 Hz to 100 Hz. In detail, the thickness of the inner liner is preferably about 1.5 mm to 2.8 mm which is thicker than a normal inner liner (thickness of about 1.0 mm).

It has been found that, regarding the pneumatic tire with the narrow-width, large-diameter size, the vehicle-interior noise of 80 Hz to 100 Hz tends to deteriorate especially under use of high internal pressure. By making the inner liner thick, vibration damping performance is enhanced, and the vehicle-interior noise of 80 Hz to 100 Hz is reduced. Since the inner liner has a smaller loss contributing to rolling resistance than other members such as the tread, noise performance can be improved while minimizing the degradation of the rolling resistance.

In the present disclosure, the inner liner may be formed with a rubber layer mainly made of butyl rubber, or a film layer mainly made of resin.

In the present disclosure, to reduce cavity resonance, the tire inner surface may be provided with a porous member, or subjected to electrostatic flocking processing.

The tire according to the present disclosure may include, on the tire inner surface, a sealant member for preventing air leakage upon puncture.

The pneumatic tire according to the present disclosure may be a side-reinforced run-flat tire including a reinforcing rubber having a crescent-shaped cross section in the tire side portion.

In the case where the pneumatic tire with the narrow-width, large-diameter size is a side-reinforced run-flat tire, the side portion may be simplified in structure, to realize both the run flat durability and the fuel efficiency. This is based on the finding that, in the case of a passenger vehicle pneumatic radial run-flat tire with the narrow-width, large-diameter size, the tire undergoes relatively small deformation in the side portion and the tread portion but undergoes relatively large deformation from the shoulder portion to the buttress portion during run-flat traveling. Such deformation is in contrast to that a conventional size tire undergoes relatively large deformation in the side portion.

Such deformation unique to the narrow-width, large-diameter size ensures sufficient run flat durability and further improves fuel efficiency even with a simplified structure.

Specifically, at least any one of the following conditions (i) to (iii) may be satisfied to simplify the tire in structure.

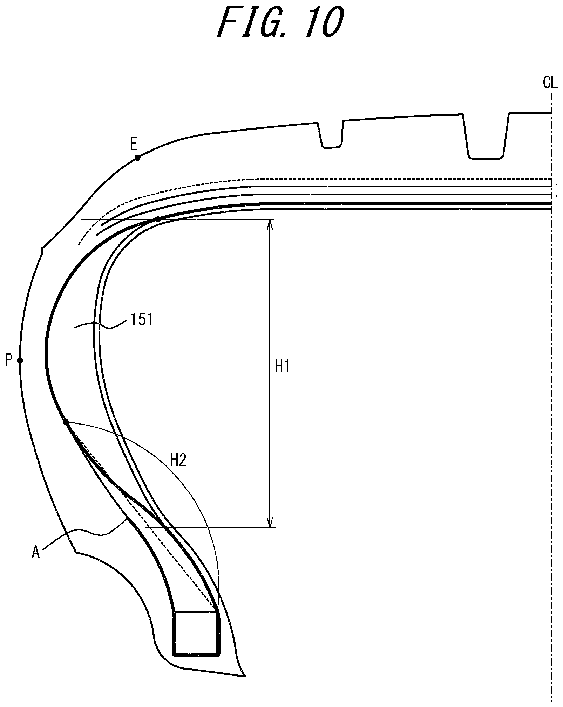

FIG. 10 is a tire widthwise schematic cross-sectional view of a tire according to Embodiment 3 of the present disclosure in the case where the tire is a run flat tire.

(i) As illustrated in FIG. 10, the folded end A of the carcass folded part is located on the tire radial inner side relative to the tire maximum width position P. (ii) A relational expression $1.8 \leq H1/H2 \leq 3.5$ is satisfied, where HI is the tire radial maximum length of the side reinforcing rubber 151 in a tire widthwise section in a reference state where the tire is attached to the rim, applied with a predetermined internal pressure, and placed under no load, and H2 is the length of a line segment connecting the tire radial outermost point of the bead filler and the tire radial outermost point of the bead core. (iii) A relational expression $10 \, (mm) \leq (SW/OD) \times H1 \leq 20 \, (mm)$ is satisfied, where HI (mm) is the tire radial maximum length of the side reinforcing rubber 151 in a tire widthwise section in a reference state where the tire is attached to the rim, applied with a predetermined internal pressure, and placed under no load.

In the case where the pneumatic tire with the narrow-width, large-diameter size is a side-reinforced run-flat tire, the circumferential main groove on the tire widthwise outermost side may be arranged closer to the tire equatorial plane CL in the tire width direction, to further improve run flat durability. This is based on the finding that, in the case of a passenger vehicle pneumatic run-flat tire with the narrow-width, large-diameter size, the tire undergoes relatively small deformation in the side portion and the tread portion but undergoes relatively large deformation from the shoulder portion to the buttress portion during run-flat traveling. Such deformation is in contrast to that a conventional size tire undergoes relatively large deformation in the side portion. Such deformation unique to the narrow-width, large-diameter size enhances the grounding property from the shoulder land portion to the buttress portion during run-flat traveling by arranging the circumferential main groove on the tire widthwise outermost side closer to the tire equatorial plane CL, thus alleviating the contact pressure. Run flat durability can be further improved in this way.

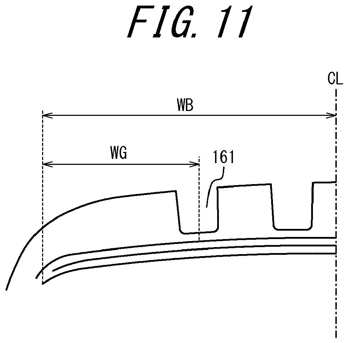

FIG. 11 is a tire widthwise cross-sectional view of a tire according to Embodiment 4 of the present disclosure in the case where the tire is a run flat tire.

In detail, a relational expression $0.5 \leq WG/WB \leq 0.8$ is preferably satisfied, where WB is the half width in the tire width direction of the belt layer maximum in tire widthwise width from among one or more belt layers in a tire widthwise section in a reference state where the tire is attached to the rim, applied with a predetermined internal pressure, and placed under no load, and WG is the tire widthwise distance from the tire widthwise end of the belt layer maximum in tire widthwise width to the tire widthwise center position of the circumferential main groove 161 on the tire widthwise outermost side of one or more circumferential main grooves.

EXAMPLES

The disclosed techniques are described in more detail below using examples, although the present disclosure is not limited to these examples.

To determine the advantageous effects according to the present disclosure, the tires of Examples 1 to 15 and Comparative Example 1 were experimentally produced.

The tire of Example 1 is a tire of tire size 165/60R19 as illustrated in FIGS. 1 and 2. The tire of Example 1 includes a tread rubber that includes a tread surface rubber layer located at the outermost surface of the tread and a tread inside rubber layer located on the tire radial inner side of the tread surface rubber layer. The 100% modulus of the tread surface rubber layer is higher than the 100% modulus of the tread inside rubber layer, and the tread surface rubber layer is made of the rubber composition of the specifications listed in Table 1. The 100% modulus of the tread surface rubber layer in the tire of Example 1 is 2.5 MPa, and the 100% modulus of the rubber layer located on the tire radial inner side of the tread surface rubber layer is 2.1 MPa.

The tires of Examples 2 to 15 and Comparative Example 1 are the same as the tire of Example 1, except that the specifications are changed as listed in Table 1.

Each of these sample tires was evaluated by the following methods.

[Wet performance]

Each sample tire was attached to a rim (rim size 5.5J19) and applied with an internal pressure (300 kPa). The sample tire was installed on a vehicle, and run on a wet road surface at 80 km/h. The stopping distance (m) upon full brake application after running in this state was measured, and the average deceleration (m/s$^2$) = V$^2$/25.92L was calculated ($a = v^2/2L$ can be calculated from $mv^2/2 = maL$ where a is the average deceleration, v is the initial speed, m is the mass, and L is the stopping distance, with wet friction coefficient (wet $\mu$)). The evaluation result is indicated by an index with the tire of Comparative Example 1 being set to 100, using the inverse of the value of the sample tire. A higher index indicates higher wet performance.

[Table 1]

| | Comparative Example 1 | Example 1 | Example 2 | Example 3 | Example 4 | Example 5 | Example 6 | Example 7 | Example 8 | Example 9 | Example 10 | Example 11 | Example 12 | Example 13 | Example 14 | Example 15 |
|---|---|---|---|---|---|---|---|---|---|---|---|---|---|---|---|---|
| [Rubber composition (parts by mass)] | | | | | | | | | | | | | | | | |
| Rubber component (A) | | | | | | | | | | | | | | | | |
| BR | 60 | 40 | 100 | - | 40 | - | - | 30 | - | - | - | - | - | - | 30 | - |
| NR | 40 | 60 | - | - | - | 100 | 100 | 70 | 100 | 85 | 85 | 100 | 85 | - | 70 | - |
| SBR | - | - | - | - | - | - | - | - | - | 15 | 15 | - | 15 | 100 | - | 100 |
| low Tg SBR*1 | - | - | - | 100 | 60 | - | - | - | - | - | - | - | - | - | - | - |
| Additive component (B) | | | | | | | | | | | | | | | | |
| Aromatic oil | - | 30 | 10 | 10 | 5 | 10 | - | - | - | - | - | - | - | - | - | 5 |
| A/O MIX*2 | - | - | - | - | - | - | 10 | - | - | - | - | - | - | - | - | - |
| $C_5$ resin*3 | - | - | - | - | - | - | - | 15 | - | - | - | - | - | - | - | 8 |
| $C_5$-$C_9$ resin*4 | - | - | - | - | - | - | - | - | - | 15 | - | - | - | - | - | - |
| $C_9$ resin*5 | - | - | - | - | - | - | - | - | 5 | - | - | 15 | 15 | 5 | 15 | - |
| Terpene phenol resin*6 | - | - | - | - | - | - | - | - | - | - | 15 | - | - | - | - | - |
| Novolac-type phenol resin*7 | - | - | - | - | - | - | - | - | - | - | - | - | - | - | 4 | - |
| SBR2 LMW | - | - | 30 | - | - | - | - | - | - | - | - | - | - | - | - | - |
| Filler (C) | | | | | | | | | | | | | | | | |
| CB ISAF*8 | 5 | 5 | 5 | 5 | 5 | 5 | 5 | 5 | 5 | 5 | 5 | 5 | 5 | 47 | 5 | 47 |
| Silica*9 | 45 | 45 | 50 | 50 | 50 | 50 | 50 | 50 | 50 | 50 | 50 | 50 | 50 | 51 | 50 | 51 |

(continued)

| | | Comparative Example 1 | Example 1 | Example 2 | Example 3 | Example 4 | Example 5 | Example 6 | Example 7 | Example 8 | Example 9 | Example 10 | Example 11 | Example 12 | Example 13 | Example 14 | Example 15 |
|---|---|---|---|---|---|---|---|---|---|---|---|---|---|---|---|---|---|
| Others | | | | | | | | | | | | | | | | | |
| | Stearic acid | 2 | 2 | 2 | 2 | 2 | 2 | 2 | 2 | 2 | 2 | 2 | 2 | 2 | 2 | 2 | 2 |
| | Antioxidant*10 | 1 | 1 | 1 | 1 | 1 | 1 | 1 | 1 | 1 | 1 | 1 | 1 | 1 | 1 | 1 | 1 |
| | Zinc oxide | 2 | 2 | 2 | 2 | 2 | 2 | 2 | 2 | 2 | 2 | 2 | 2 | 2 | 2 | 2 | 2 |
| | Vulcanization accelerator*11 | 0.8 | 0.8 | 0.8 | 0.8 | 0.8 | 0.8 | 0.8 | 0.8 | 0.8 | 0.8 | 0.8 | 0.8 | 0.8 | 0.8 | 0.8 | 0.8 |
| | Sulfur | 1 | 1 | 1 | 1 | 1 | 1 | 1 | 1 | 1 | 1 | 1 | 1 | 1 | 1 | 1 | 1 |
| Content of diene-based rubber in rubber component (A) (mass%) | | 100 | 100 | 100 | 100 | 100 | 100 | 100 | 100 | 100 | 100 | 100 | 100 | 100 | 100 | 100 | 100 |
| Content of additive component (B) with respect to rubber component (A) (parts by mass) | | 0 | 30 | 40 | 10 | 5 | 10 | 10 | 15 | 5 | 15 | 15 | 15 | 15 | 5 | 19 | 13 |
| [Evaluation] | | | | | | | | | | | | | | | | | |

EP 3 348 423 A1

(continued)

| | Compara-tive Example 1 | Example 1 | Example 2 | Example 3 | Example 4 | Example 5 | Example 6 | Example 7 | Example 8 | Example 9 | Example 10 | Example 11 | Example 12 | Example 13 | Example 14 | Example 15 |
|---|---|---|---|---|---|---|---|---|---|---|---|---|---|---|---|---|
| Wet performance | 90 | 100 | 105 | 103 | 104 | 106 | 106 | 107 | 113 | 108 | 110 | 113 | 110 | 94 | 111 | 97 |

*1: made by JSR Corporation, product name "SL584", styrene 5 mass%, vinyl 28 mass%
*2: made by JX Nippon Oil & Energy Corporation, product name "A/O MIX" (naphthenic oil)
*3: made by ExxonMobil Chemical Company, trade name "ECR1102"
*4: made by ExxonMobil Chemical Company, trade name "ECR213"
*5: made by JX Nippon Oil & Energy Corporation, trade name "Nisseki Neopolymer® (Nisseki Neopolymer is a registered trademark in Japan, other countries, or both) 140"
*6: made by Yasuhara Chemical Co., Ltd., trade name "YS POLYSTER T100"
*7: made by Sumitomo Bakelite Co., Ltd., Sumilite Resin "PR50235"
*8: made by Asahi Carbon Co., Ltd., trade name "#80", $N_2SA$ 115m$^2$/g, N220 (ISAF)
*9: made by Tosoh Silica Corporation, trade name "Nipsil AQ"
*10: antioxidant: N-(1,3-dimethylbutyl)-N'-phenyl-p-phenylenediamine, made by Ouchi Shinko Chemical Industrial Co., Ltd., trade name "NOCRAC 6C"
*11: vulcanization accelerator: 1,3-diphenyl guanidine, made by Sumitomo Chemical Co., Ltd., trade name "SOXINOL® (SOXINOL is a registered trademark in Japan, other countries, or both) D-G"

As can be seen from Table 1, the tires of Examples 1 to 15 had improved wet performance as compared with the tire of Comparative Example 1.

INDUSTRIAL APPLICABILITY

It is thus possible to provide a pneumatic tire having sufficiently improved wet performance.

REFERENCE SIGNS LIST

1 pneumatic tire
21 bead portion
22 carcass
23 tread rubber
23a tread surface rubber layer
23b tread inside rubber layer
24 tread portion
25 sidewall portion
26 belt
3 rib-like land portion
3s shoulder rib-like land portion
3c center rib-like land portion
4 circumferential main groove
5 one-end open sipe
5c one-end open sipe (of center rib-like land portion)
5s one-end open sipe (of shoulder rib-like land portion)
5c1 circumferential sipe portion
5c2 widthwise sipe portion
6 both-end closed sipe
6c both-end closed sipe (of center rib-like land portion)
6s both-end closed sipe (of shoulder rib-like land portion)
100 widthwise groove
110 tread edge-side main groove
111 adjacent land portion
112 one-end open groove
113 shallow groove
121, 122 inclined belt layer
123, 124 circumferential belt layer
131, 132 inclined belt layer
133 circumferential belt layer
141, 142 inclined belt layer
143 circumferential belt layer
151 side reinforcing rubber
161 circumferential main groove
CL tire equatorial plane
E tread ground contact edge
L pitch length
P1 to P3 pattern
T tread surface
W land portion width

**Claims**

1. A pneumatic tire comprising
a tread rubber that includes: a tread surface rubber layer located at an outermost surface of a tread; and a tread inside rubber layer located on a tire radial inner side of the tread surface rubber layer,

wherein a 100% modulus of the tread surface rubber layer is higher than a 100% modulus of the tread inside rubber layer, and

the tread surface rubber layer is made of a rubber composition including: a rubber component (A) containing 50 mass% or more of diene-based rubber; and, with respect to 100 parts by mass of the rubber component (A), 5 to 50 parts by mass of at least one additive component (B) selected from: thermoplastic resin; oil; and an aromatic vinyl compound-conjugated diene compound copolymer whose polystyrene-equivalent weight-average molecular weight measured by gel permeation chromatography is 5,000 to 200,000.

2. The pneumatic tire according to claim 1, comprising, in a tread surface, at least one rib-like land portion defined by a tread ground contact edge and a circumferential main groove continuously extending in a tire circumferential direction or by two circumferential main grooves continuously extending in the tire circumferential direction and adjacent to each other.

3. The pneumatic tire according to claim 2, wherein the rib-like land portion has no both-end open sipe having both ends open to the tread ground contact edge and the circumferential main groove or to the two circumferential main grooves, and has a one-end open sipe having one end open to one of the tread ground contact edge and the circumferential main groove or to one of the two circumferential main grooves and the other end terminating within the rib-like land portion.

4. The pneumatic tire according to claim 3, wherein the one-end open sipe includes: a circumferential sipe portion extending from the other end in the tire circumferential direction; and a widthwise sipe portion extending from the circumferential sipe portion in a tire width direction and open to the circumferential main groove or the tread ground contact edge.

5. The pneumatic tire according to any of claims 2 to 4, wherein the rib-like land portion has a both-end closed sipe having both ends terminating within the rib-like land portion.

FIG. 1

FIG. 2

# FIG. 3A

WIDE GROUND CONTACT SHAPE

WATER STREAMLINE

WATER FILM ENTERING REGION

ACTUAL GROUND CONTACT REGION

L

W

# FIG. 3B

NARROW GROUND CONTACT SHAPE

WATER STREAMLINE

WATER FILM ENTERING REGION

ACTUAL GROUND CONTACT REGION

L

W

# FIG. 4

## *FIG. 5*

# FIG. 6

*FIG. 7*

*FIG. 8*

## FIG. 9

# FIG. 10

# FIG. 11

## INTERNATIONAL SEARCH REPORT

International application No.

PCT/JP2016/003508

### A. CLASSIFICATION OF SUBJECT MATTER

*B60C1/00*(2006.01)i, *B60C11/00*(2006.01)i, *B60C11/03*(2006.01)i, *B60C11/12* (2006.01)i, *C08L9/00*(2006.01)i, *C08L25/10*(2006.01)i, *C08L91/00*(2006.01)i

According to International Patent Classification (IPC) or to both national classification and IPC

### B. FIELDS SEARCHED

Minimum documentation searched (classification system followed by classification symbols)
B60C1/00, B60C11/00, B60C11/03, B60C11/12, C08L9/00, C08L25/10, C08L91/00

Documentation searched other than minimum documentation to the extent that such documents are included in the fields searched
Jitsuyo Shinan Koho        1922–1996   Jitsuyo Shinan Toroku Koho   1996–2016
Kokai Jitsuyo Shinan Koho  1971–2016   Toroku Jitsuyo Shinan Koho   1994–2016

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br>Y | JP 2009-166712 A  (Bridgestone Corp.),<br>30 July 2009 (30.07.2009),<br>claims 1, 2, 5; paragraph [0025]<br>(Family: none) | 1,2,5<br>3,4 |
| X<br>Y | JP 2009-173048 A  (Bridgestone Corp.),<br>06 August 2009 (06.08.2009),<br>claims 1, 2, 4, 5; examples<br>(Family: none) | 1,2,5<br>3,4 |

☒ Further documents are listed in the continuation of Box C.   ☐ See patent family annex.

| | |
|---|---|
| *    Special categories of cited documents:<br>"A"   document defining the general state of the art which is not considered    to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search<br>      30 September 2016 (30.09.16) | Date of mailing of the international search report<br>      11 October 2016 (11.10.16) |
|---|---|
| Name and mailing address of the ISA/<br>      Japan Patent Office<br>      3-4-3,Kasumigaseki,Chiyoda-ku,<br>      Tokyo 100-8915,Japan | Authorized officer<br><br>Telephone No. |

Form PCT/ISA/210 (second sheet) (January 2015)

**INTERNATIONAL SEARCH REPORT**

International application No.

PCT/JP2016/003508

C (Continuation).   DOCUMENTS CONSIDERED TO BE RELEVANT

| Category* | Citation of document, with indication, where appropriate, of the relevant passages | Relevant to claim No. |
|---|---|---|
| X<br>Y | JP 2015-514040 A  (Compagnie Generale des Etablissements Michelin),<br>18 May 2015 (18.05.2015),<br>claim 1; example 1; table 3<br>& US 2015/0034226 A1<br>claims<br>& WO 2013/149803 A1      & EP 2834297 A1<br>& CN 104204063 A | 1,2,5<br>3,4 |
| X<br>Y | WO 2008/016145 A1  (Bridgestone Corp.),<br>07 February 2008 (07.02.2008),<br>claim 1; paragraph [0014]<br>& US 2009/0308514 A1<br>claims<br>& EP 2048006 A1 | 1,2,5<br>3,4 |
| X<br>Y | JP 2008-18912 A  (The Yokohama Rubber Co., Ltd.),<br>31 January 2008 (31.01.2008),<br>claim 1; fig. 1<br>(Family: none) | 1,2,5<br>3,4 |
| Y | JP 2006-224770 A  (The Yokohama Rubber Co., Ltd.),<br>31 August 2006 (31.08.2006),<br>claim 1; paragraph [0001]; fig. 1<br>(Family: none) | 3,4 |
| Y | WO 2013/065319 A1  (Bridgestone Corp.),<br>10 May 2013 (10.05.2013),<br>paragraph [0008]; fig. 7(a)<br>& US 2014/0290820 A1<br>claims<br>& EP 2781372 A1           & CN 104010836 A | 3,4 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014162242 A